# EUROPÄISCHE PATENTANMELDUNG

(11) **EP 4 272 935 A1**
(43) Veröffentlichungstag der Anmeldung: **08.11.2023**
(21) Anmeldenummer: 22171182.3
(22) Anmeldetag: 02.05.2022
(51) Int. Cl.: B29C 70/06, B29D 99/00, F03D 1/06, B29B 17/00, B29L 31/08, D04H 1/4274, B29C 70/52

(54) **GURT, INSBESONDERE HOLMGURT, FÜR EIN ROTORBLATT EINER WINDKRAFTANLAGE, ROTORBLATT MIT WENIGSTENS EINEM HOLMGURT SOWIE VERFAHREN ZUR HERSTELLUNG EINES GURTS**

(71) Anmelder: V-Carbon GmbH, 82024 Taufkirchen (DE)
(72) Erfinder: Die Erfindernennung liegt noch nicht vor
(74) Vertreter: Canzler & Bergmeier Patentanwälte Partnerschaft mbB

(57) **Zusammenfassung**

Ein Gurt, insbesondere Holmgurt (5), für ein Rotorblatt (2) einer Windkraftanlage (1), weist mehrere übereinander angeordnete, sich in einer Längsrichtung (LR) des Gurts erstreckende Lagen (10) aus wenigstens einem ersten Faserverbundwerkstoff auf, welcher eine Vielzahl von in eine Kunststoff-Matrix (11) eingebetteten Carbonfasern (12) umfasst. Die Carbonfasern (12) weisen einen Anteil von wenigstens 50%, vorzugsweise wenigstens 80%, recycelten Carbonfasern (12) auf, wobei die recycelten Carbonfasern (12) in Form von Stapelfasern vorliegen. Ein Rotorblatt (2) für eine Windkraftanlage (1) weist eine ein- oder mehrteilige Schale (8) und wenigstens einen Gurt nach einem der vorhergehenden Ansprüche auf. Bei einem Verfahren zur Herstellung eines solchen Gurts werden Carbonfasern (12) mit einem Anteil von wenigstens 50%, vorzugsweise wenigstens 80%, recycelter Carbonfasern (12) in Form von Stapelfasern eingesetzt.

## Beschreibung

Die vorliegende Erfindung betrifft einen Gurt, insbesondere Holmgurt, für ein Rotorblatt einer Windkraftanlage, mit mehreren übereinander angeordneten, sich in einer Längsrichtung des Gurts erstreckenden Lagen aus wenigstens einem ersten Faserverbundwerkstoff, welcher eine Vielzahl von in eine Kunststoff-Matrix eingebetteten Carbonfasern umfasst. Weiterhin betrifft die Erfindung ein Rotorblatt für eine Windkraftanlage mit einer ein- oder mehrteiligen Schale und wenigstens einem solchen Gurt. Zudem betrifft die Erfindung ein Verfahren zur Herstellung eines solchen Holmgurts.

Windenergieanlagen haben im Zuge der Energiewende eine starke Verbreitung erfahren wobei immer größere und leistungsfähigere Windkraftanlagen gebaut werden. Um dem steigenden Leistungsbedarf gerecht zu werden, sind auch die Rotordurchmesser und damit die Länge der Rotorblätter immer größer geworden.

Im Stand der Technik wurden Rotorblätter lange Zeit aus glasfaserverstärkten Kunststoffen hergestellt. Üblicherweise beinhalten die Rotorblätter zwei Halbschalen sowie Holmgurte zur Versteifung im Inneren der Rotorblätter. Die Holmgurte bestehen ebenfalls aus faserverstärkten Kunststoffen und erstrecken sich in Längsrichtung der Rotorblätter, um Zug- und Druckkräfte aufzunehmen. Inzwischen sind Rotorblätter mit einer Länge von über 80 m üblich geworden. Bei solchen Rotorblättern sind die mechanischen Kennwerte von Glasfaser nicht mehr ausreichend und sind hierbei zunehmend Kohlenstofffasern zum Einsatz gekommen.

Die DE 10 2016 101 663 A1 beschreibt einen Holmgurt für ein Rotorblatt einer Windkraftanlage, bei dem wenigstens zwei verschiedene Faserverbundmaterialien zum Einsatz kommen. Dabei sollen die spezifischen Charakteristika der Materialien wie Steifigkeit, spezifisches Gewicht oder elektrische Leitfähigkeit gezielt genutzt werden können. Dadurch soll eine steifere Konfiguration des Holm Gurts und damit auch des Rotorblattes ermöglicht werden. Dabei können auch Kohlenstofffasern zum Einsatz kommen.

Aufgrund der Größe der Rotorblätter und des großen Materialbedarfs verursacht die Herstellung von Rotorblättern erhebliche Kosten und einen erheblichen Ressourcen- und Energieverbrauch. Dies trifft auch auf die Herstellung der Holmgurte zu, für welche große Mengen von Kunststoffmaterialien und Fasermaterialien benötigt werden.

Aufgabe der vorliegenden Erfindung ist es daher, einen Holmgurt vorzuschlagen, der kosten- und energiesparend hergestellt werden kann. Weiterhin soll ein entsprechendes Verfahren vorgeschlagen werden.

Die Aufgabe wird gelöst mit den Merkmalen der unabhängigen Patentansprüche.

Ein Gurt, insbesondere ein Holmgurt, für ein Rotorblatt einer Windkraftanlage weist mehrere übereinander angeordnete, sich in einer Längsrichtung des Gurts erstreckende Lagen aus wenigstens einem ersten Faserverbundwerkstoff auf, welcher eine Vielzahl von in eine Kunststoff-Matrix eingebetteten Carbonfasern umfasst.

Es wird vorgeschlagen, dass die Carbonfasern einen Anteil von wenigstens 50%, vorzugsweise wenigstens 80%, recycelten Carbonfasern aufweisen, wobei die recycelten Carbonfasern in Form von Stapelfasern vorliegen, die parallelisiert in der jeweiligen Lage angeordnet sind.

Es wird weiterhin ein Verfahren zur Herstellung eines Gurts vorgeschlagen, das zumindest die Schritte
- Bereitstellen von Carbonfasern mit einem Anteil von wenigstens 50%, vorzugsweise wenigstens 80%, recycelter Carbonfasern in Form von Stapelfasern,
- Parallelisieren der recycelter Carbonfasern
- Herstellen mehrerer Lagen aus wenigstens einem ersten Faserverbundwerkstoff durch Einbetten der recycelten Carbonfasern in eine Kunststoff-Matrix
- Ausbilden des Gurts durch Anordnen der Lagen aus Faserverbundwerkstoff übereinander und in einer Längsrichtung des Gurts.

Holmgurte aus werden meist im Harzinfusionsverfahren oder aus Prepreg-Lagen aufgebaut. Üblicherweise werden dabei faserverstärkte Einzellagen mit Glasfaser- oder Kohlefaserverstärkungen verwendet. Insbesondere in Längsrichtung der Rotorblätter müssen die Holmgurte eine hohe Steifigkeit aufweisen. Im Stand der Technik wurden bisher nur Kohlefaserrovings aus Carbonneufasern eingesetzt. Diese werden in Form von Endlosfilamenten produziert, zu den Rovings zusammengefasst und beispielsweise als Gelege in die Holmgurte eingelegt. Demgegenüber liegen Recyclingfasern nach dem Recyclingprozess als diskontinuierliche Fasern mit unterschiedlichen Längen, Durchmessern und je nach Ausgangsmaterial auch unterschiedlichen Eigenschaften vor. Recycelte Carbonfasern wurden daher bisher nicht für höchstbeanspruchte Bauteile eingesetzt.

Gemäß der vorliegenden Erfindung können nun auch recycelte Carbonfasern für die hochbeanspruchten Gurte und insbesondere auch die Holmgurte eingesetzt werden. Dies wird dadurch erreicht, dass die als Stapelfasern bereitgestellten Fasern zunächst weiterverarbeitet und parallelisiert werden und erst dann in die Lagen des Faserverbundwerkstoffes eingebracht werden. Die Fasern können dadurch genau in der Längsrichtung der Lagen bzw. des Gurts und damit belastungsgerecht ausgerichtet werden. Die Gurte können dabei durch die Verwendung von Recyclingfasern zugleich kostengünstig und energiesparend hergestellt werden. Ebenso wird bei der Herstellung der Gurte und der Rotorblätter der C₂-Ausstoß erheblich reduziert. So kann die ohnehin schon sehr gute Energiebilanz und CO₂-Bilanz der Windenergie noch mal erheblich verbessert werden.

Dieselben Vorteile treffen auch auf ein Rotorblatt für eine Windkraftanlage mit einer ein- oder mehrteiligen Schale und wenigstens einem derartigen Gurt zu, weshalb für dieses ebenfalls Schutz beansprucht wird.

Besonders vorteilhaft ist es deshalb bei dem Holmgurt und dem Verfahren auch, wenn der Anteil an recycelten Carbonfasern wenigstens 90 % beträgt. Die Energie- und Kosteneinsparungen können hierdurch noch weiter gesteigert werden und der CO₂-Ausstoß reduziert werden. Vorteilhaft ist es deshalb auch, wenn sogar 100 % recycelte Carbonfasern zum Einsatz kommen.

Besonders vorteilhaft ist es bei dem Verfahren, wenn die recycelten Carbonfasern vor dem Einbetten in die Kunststoff-Matrix nicht nur parallelisiert, sondern auch zu kontinuierlichen Faserkomplexen, insbesondere zu Tapes oder Garnen, zusammengefasst werden. Bei dem Gurt ist es entsprechend vorteilhaft, wenn die recycelten Carbonfasern parallelisiert und zu kontinuierlichen Faserkomplexen, insbesondere zu Tapes oder Garnen, zusammengefasst in dem Faserverbundwerkstoff vorliegen. Zum belastungsgerechten Ausrichten der Fasern bzw. der Faserkomplexe können die Faserkomplexe einzeln gelegt oder vorzugsweise als Gelege vorgefertigt in die Lagen eingebracht werden. Die Faserkomplexe können jedoch auch in Form Geweben, Gesticken oder Geflechten eingebracht werden.

Unter einem Faserkomplex wird im Rahmen der vorliegenden Anmeldung eine Vielzahl von Einzelfasern verstanden, die zu einem zusammenhängenden Strang zusammengefasst sind. Dies kann mit Hilfe von Bindematerialien oder Hilfsfasern bzw. Umwindefäden oder auch rein mechanisch z.B. durch Verdrehung erfolgen. Faserkomplexe aus Recyclingfasern können beispielsweise Garne, Bänder, Tapes, Flechtmaterialien und dgl. umfassen.

Bei dem Verfahren ist es weiterhin vorteilhaft, wenn vor dem Anordnen der Lagen übereinander ein Schritt des Aushärtens der Lagen durchgeführt wird. Die Lagen können hierdurch vorteilhaft und in größeren Stückzahlen vorgefertigt werden. Innerhalb der Lagen können dabei auch mehrere Schichten von Faserkomplexen übereinander angeordnet werden, so dass Lagen größerer Dicke hergestellt werden können.

Nach einer anderen Ausführung des Verfahrens ist es jedoch ebenso vorteilhaft, wenn zuerst die Lagen übereinander angeordnet werden und der Schritt des Aushärtens der Lagen nach dem Anordnen durchgeführt wird. Dabei können mehrere oder alle für den jeweiligen Gurt vorgesehenen Lagen in die Form eingelegt werden und diese dann mittels Harzinfusionstechnik zu imprägnieren. Alternativ können die einzelnen Lagen auch jeweils einzeln nacheinander in die Form eingebracht und einzeln imprägniert werden.

Bei dem Gurt ist es weiterhin vorteilhaft, wenn die Carbonfasern sich unidirektional in einer Längsrichtung der Lagen erstrecken. Da die Lagen in der Längsrichtung des Gurtes angeordnet werden, erstrecken sich sodann die Faserkomplexe in der Längsrichtung des Gurtes und sind, nach dem Einbau der Gurte in das Rotorblatt, optimal in Bezug auf die Längsachse des Rotorblatts und damit beanspruchungsgerecht ausgerichtet. Bei dem Verfahren werden die Faserkomplexe entsprechend unidirektional in Längsrichtung der Lagen ausgerichtet.

Besonders vorteilhaft ist es bei dem Gurt weiterhin, wenn die Faserkomplexe sich unterbrechungsfrei über eine gesamte Länge der jeweiligen Lage erstrecken. Die einzelnen Lagen weisen hierdurch über ihre gesamte Länge gleichbleibende Eigenschaften auf.

Weiterhin ist es vorteilhaft, wenn die Carbonfasern innerhalb der Lagen, insbesondere innerhalb der Faserkomplexe, hochausgerichtet sind, wobei ein Ausrichtungsgrad der Carbonfasern mindestens 95% +/-5° beträgt. Dies bedeutet, dass zumindest 95 % aller Fasern mit einem Abweichungswinkel von maximal 5° zur Längsrichtung der Faserkomplexe bzw. der Lagen ausgerichtet sind. Mit einem derart hohen Ausrichtungsgrad können die Fasern besonders gut belastungsgerecht in Längsrichtung der Lagen bzw. des Gurts ausgerichtet werden. Wenn die Carbonfasern mit einer möglichst geringen Abweichung ausgerichtet sind, können die Eigenschaften der Fasern optimal ausgenutzt werden und es können mit weniger Fasermaterial bessere Festigkeitswerte erreicht werden. Hierdurch können weitere Einsparungen bezüglich Kosten und Gewicht erzielt werden. Dem Ausrichten der Carbonfasern kommt deshalb eine sehr hohe Bedeutung zu.

Zum Ausrichten von recycelten Carbonstapelfasern sind bereits verschiedene Verfahren bekannt geworden. Beispielsweise können in einem Nassprozess die einzelnen Carbonfasern mit einem Fluid auf Platten gespritzt werden. Die Carbonfasern rutschen sodann an den Platten entlang, wobei sie sich ausrichten, und treffen schließlich auf einen an der Unterseite der Platten angeordneten, bewegten Film, auf dem sie nacheinander abgelegt werden. Hierdurch wird schließlich ein Tape ausgebildet. Eine solche Methode ist beispielsweise in der WO 2014/170637 A1 beschrieben. Allerdings ist dieses Verfahren auf kürzere Faserlängen von wenigen Millimetern beschränkt. Die Recyclingmaterialien müssen deshalb stark zerkleinert werden.

Bevorzugt werden deshalb die Carbonfasern in einem textilen Herstellungsprozess auf einem Krempel oder einer Karde ausgerichtet. Die so entstandenen Vliese können im Anschluss zu Faserbändern mit parallelisierten und ausgerichteten Carbonfasern zusammengefasst und beispielsweise in einem Verstreckungsprozess noch weiter ausgerichtet werden. Durch den Verstreckungsprozess weisen die Carbonfasern in dem Fasern einen sehr hohen Ausrichtungsgrad auf.

Werden die Carbonfasern mit einem Bindematerial vermischt, so kann dieses während oder auch nach dem Ausrichten der Carbonfasern beispielsweise durch Wärme oder auch chemisch aktiviert werden, um die Carbonfasern in dem Tape zu binden. Hierdurch können Tapes mit einem hohen Ausrichtungsgrad der Carbonfasern erzeugt werden.

Vorteilhaft ist es weiterhin, wenn die Carbonfasern eine Faserlänge zwischen 2 mm und 100 mm aufweisen. Es können somit sowohl Recyclingmaterialien mit eher kürzeren Fasern als auch Recyclingmaterialien mit eher längeren Fasern für die Gurte bzw. bei dem Verfahren eingesetzt werden. Insbesondere ist es vorteilhaft, wenn die Carbonfasern eine Faserlänge zwischen 20 mm und 100 mm aufweisen.

Zudem ist es vorteilhaft, wenn die Kunststoff-Matrix ein Duromermaterial, insbesondere ein Vinylesterharz oder ein Epoxidharz, beinhaltet. Es ist allerdings nicht ausgeschlossen, dass einzelne oder auch mehrere Lagen vorgesehen werden, bei welchen die Kunststoff-Matrix ein Thermoplastmaterial umfasst.

Nach einer Weiterbildung der Erfindung ist es vorteilhaft, wenn der Gurt sich in einer Längsrichtung des Gurts erstreckende Lagen aus wenigstens einem weiteren Faserverbundwerkstoff umfasst bzw. bei dem Verfahren weitere, sich in einer Längsrichtung des Gurts erstreckende Lagen aus wenigstens einem weiteren Faserverbundwerkstoff angeordnet werden. Beispielsweise können auch Lagen mit Carbonneufasern im Wechsel mit den Lagen mit recycelten Carbonfasern in den Gurten angeordnet werden. Ebenso ist es denkbar, in bestimmten Bereichen der Gurte Lagen mit Carbonneufasern anzuordnen. Wesentlich ist es dabei in jedem Fall, dass die einzelnen Lagen eines Gurtes weitgehend die gleiche Steifigkeit aufweisen. Denkbar ist es weiterhin, dass die weiteren Lagen aus den weiteren Faserverbundwerkstoffen eine Kunststoff-Matrix mit einem anderen Kunststoffmaterial, insbesondere einem anderen Duromermaterial, umfassen.

Nach einer vorteilhaften Ausführung der Erfindung erstreckt sich wenigstens ein Teil der Lagen über die gesamte Länge des Gurts. Hierdurch erhält der Gurt über die gesamte Länge eine ausreichende Steifigkeit.

Aufgrund der in Richtung der Rotorblattspitze abnehmenden Fliehkräfte beim Betrieb des Rotors ist jedoch im Bereich der Rotorblattspitze eine geringere Steifigkeit erforderlich als an der Blattwurzel. Deshalb ist es weiterhin vorteilhaft, wenn sich wenigstens ein weiterer Teil der Lagen über weniger als die gesamte Länge des Gurts erstreckt. Beispielsweise ist es vorteilhaft, wenn ein weiterer Teil der Lagen sich über wenigstens zwei Drittel der Länge des Gurts erstreckt. Ebenso ist es vorteilhaft, wenn zusätzlich ein weiterer Teil sich wenigstens über die Hälfte oder ein Drittel der Länge des Gurts erstreckt.

Vorteilhaft ist es weiterhin, wenn die Lagen plattenförmige oder stangenförmige Längsprofile umfassen. Beispielsweise können solche Längsprofile pultrudierte Längsprofile sein. Bei dem Verfahren ist es entsprechend vorteilhaft, wenn die Lagen als plattenförmige oder stangenförmige Längsprofile vorgefertigt werden, insbesondere pultrudiert werden. Die einzelnen Lagen können hierdurch vorteilhaft und in großen Stückzahlen vorgefertigt werden. Dabei ist es auch möglich, während des Produktionsprozesses oder bei der Anordnung der Lagen, insbesondere, wenn diese stangenförmig ausgebildet sind, diese der geplanten Form des Rollengurts anzupassen und beispielsweise mit einer bestimmten Krümmung zu versehen.

Es ist jedoch auch möglich, dass die einzelnen Lagen durch Tapes aus Fasermaterial gebildet sind. Diese können vorimprägniert sein oder auch trocken in die Form gelegt werden und erst beim Verbinden der Lagen zu dem Holmgurt im Infusionsverfahren imprägniert werden. Ebenso wäre es denkbar, diese im Sheet-Molding-Compound-Verfahren herzustellen.

Auch ist es vorteilhaft, wenn die Längsprofile sich über eine gesamte Breite der Gurte erstrecken. Es können dann zur Herstellung des Gurts die Längsprofile einfach übereinandergelegt und miteinander verbunden werden.

Vorteilhaft ist es zudem, wenn die Lagen aus dem ersten Faserverbundwerkstoff, insbesondere die Längsprofile, eine Zugfestigkeit von mindestens 1400 MPa, vorzugsweise 1800 MPa und besonders bevorzugt mindestens 2000 MPa aufweisen. Es können mit derartigen Festigkeitswerten auch mit Faserverbundwerkstoffen aus recycelten Carbonfasern Gurte mit hoher Steifigkeit hergestellt werden, die eine hohe Betriebssicherheit gewährleisten. Insbesondere mit recycelten Carbonfasern, die zu endlosen Faserkomplexen wie Tapes oder Garnen verarbeitet wurden, können derartige Festigkeitswerte erzielt werden.

Besonders vorteilhaft ist es außerdem, wenn die Lagen einen Faservolumengehalt von wenigstens 40%, bevorzugt von wenigstens 50% und besonders bevorzugt von wenigstens 60% aufweisen. Mit einem derartigen Faservolumengehalt können ebenfalls besonders gute mechanische Kennwerte der einzelnen Lagen bzw. der Holmgurte erzielt werden. Es kann bei einem derartigen Faservolumengehalt zudem eine gute Durchdringung der Fasern mit dem Matrixmaterial erreicht werden.

Bei dem Rotorblatt ist es zudem vorteilhaft, wenn der wenigstens eine Gurt auf einer windzugewandten Seite des Rotorblattes angeordnet ist. Dieses ist in den meisten Lastfällen die zugbelastete Seite. Da die recycelten Carbonfasern zumindest in Form von endlosen Faserkomplexen sehr gute Zugfestigkeiten aufweisen, können die Gurte dort vorteilhaft eingesetzt werden.

Es kann jedoch auch Lastfälle geben, bei denen auch auf der eigentlich zugbelasteten Seite hohe Druckbelastungen auftreten. Diese können bis zu 80% der Druckbelastung der druckbelasteten Seite erreichen. Deshalb kann es auch sinnvoll sein, in den Gurten wie bereits erwähnt weitere Lagen, die überwiegend oder vollständig Carbonneufasern enthalten, anzuordnen.

Weiterhin ist es vorteilhaft, wenn das Rotorblatt einen weiteren Gurt aufweist, welcher auf einer windabgewandten Seite des Rotorblattes angeordnet ist. Es hängt dabei von den erreichten mechanischen Kennwerten ab, ob auch auf der druckbelasteten Seite ein Gurt, der einen großen Anteil Recyclingfasern enthält, eingesetzt werden kann. Denkbar ist es aber auch, auf der druckbelasteten Seite einen Gurt einzusetzen, der überwiegend oder vollständig Carbonneufasern enthält.

Bei dem Verfahren ist es weiterhin vorteilhaft, wenn die recycelten Carbonfasern aus End-of-Life-Bauteilen, insbesondere aus End-of-Life-Rotorblättern, gewonnen werden. Durch das Recycling dieser Bauteile kann zum einen sichergestellt werden, dass ein hochwertiges Recyclingmaterial gewonnen wird und zum anderen kann die CO₂-Bilanz der Windenergie insgesamt weiter reduziert werden.

Weiterhin ist es vorteilhaft, wenn die recycelten Carbonfasern in einem Solvolyseverfahren gewonnen werden. Die Fasern können hierdurch ohne Rückstände und vergleichsweise unbeschädigt bereitgestellt werden und können gut mit dem Matrixmaterial imprägniert werden. Zudem können die Carbonfasern im Gegensatz zu einem thermischen Recyclingprozess nahezu CO₂-neutral hergestellt werden.

Weitere Vorteile der Erfindung werden anhand der nachfolgend dargestellten Ausführungsbeispiele beschrieben. Es zeigen:
- **Figur 1**: eine Windkraftanlage in einer schematischen Übersichtsdarstellung,
- **Figur 2**: eine schematische, perspektivische Darstellung eines Rotorblatts mit einem Gurt,
- **Figur 3**: eine schematische Schnittdarstellung eines Rotorblatts mit einem Holm mit zwei Holmgurten und Hinterkantengurten,
- **Figur 4**: eine schematische Schnittdarstellung eines Gurtes mit mehreren, übereinander angeordneten Lagen aus einem Faserverbundwerkstoff nach einer ersten Ausführung,
- **Figur 5**: eine schematische Schnittdarstellung eines Gurtes mit mehreren, übereinander angeordneten Lagen nach einer zweiten Ausführung,
- **Figur 6**: eine schematische Längsschnittsdarstellung einer Lage eines Gurtes mit darin angeordneten Faserkomplexen,
- **Figur 7**: eine schematische Darstellung eines Faserkomplexes mit recycelten Carbonfasern in Form eines Tapes,
- **Figur 8**: eine schematische Darstellung eines Faserkomplexes mit recycelten Carbonfasern in Form eines Garns,
- **Figur 9**: eine schematische Querschnittsdarstellung eines Faserkomplexes in Form eines Tapes Umwindegarnes,
- **Figur 10**: eine schematische Querschnittsdarstellung eines Faserkomplexes in Form eines Umwindegarnes
- **Figur 11**: eine schematische Querschnittsdarstellung einer Lage aus einem erstem Faserverbundwerkstoff in Form eines Längsprofils,
- **Figur 12**: eine schematische Querschnittsdarstellung einer Lage aus einem erstem Faserverbundwerkstoff in Form eines Längsprofils nach einer weiteren Ausführung.

Bei der nachfolgenden Beschreibung der Figuren werden für in den verschiedenen Figuren jeweils identische und/oder zumindest vergleichbare Merkmale gleiche Bezugszeichen verwendet. Die einzelnen Merkmale, deren Ausgestaltung und/oder Wirkweise werden meist nur bei ihrer ersten Erwähnung ausführlich erläutert. Werden einzelne Merkmale nicht nochmals detailliert erläutert, so entspricht deren Ausgestaltung und/oder Wirkweise der Ausgestaltung und Wirkweise der bereits beschriebenen gleichwirkenden oder gleichnamigen Merkmale. Weiterhin sind aus Gründen der Übersichtlichkeit von mehreren identischen Bauteilen bzw. Merkmalen oftmals nur eines oder nur einige wenige beschriftet.

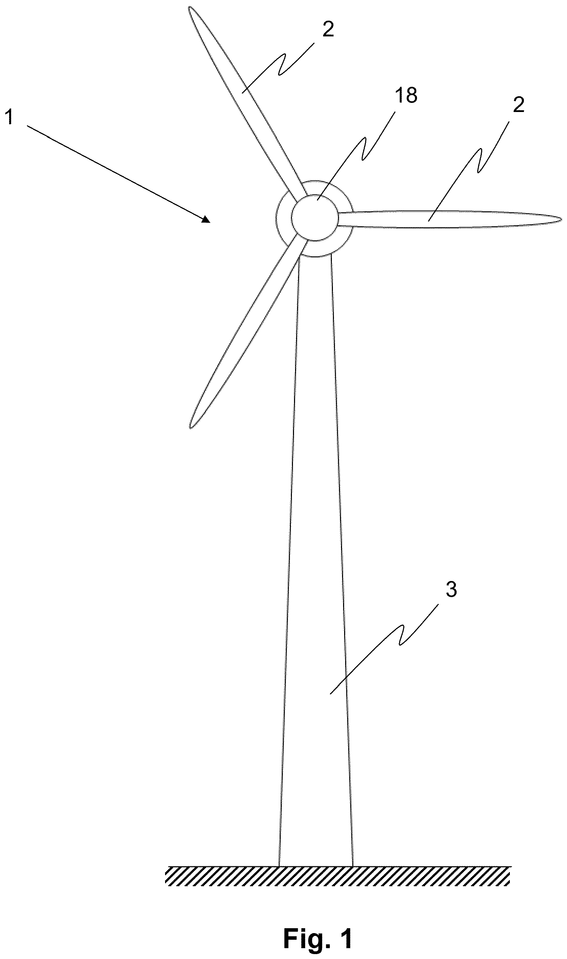

Figur 1 zeigt eine Windkraftanlage 1 in einer schematischen Übersichtsdarstellung. Die Windkraftanlage 1 weist in üblicher Weise einen hier nicht bezeichneten Rotor mit drei Rotorblättern 2 und einer Nabe 18 auf. Der Rotor ist zusammen mit der ebenfalls nicht bezeichneten Gondel auf einer Tragstruktur wie einem Turm 3 angeordnet. Die Gurte gemäß der vorliegenden Erfindung werden in den Rotorblättern 2 von Windkraftanlagen 1 eingesetzt.

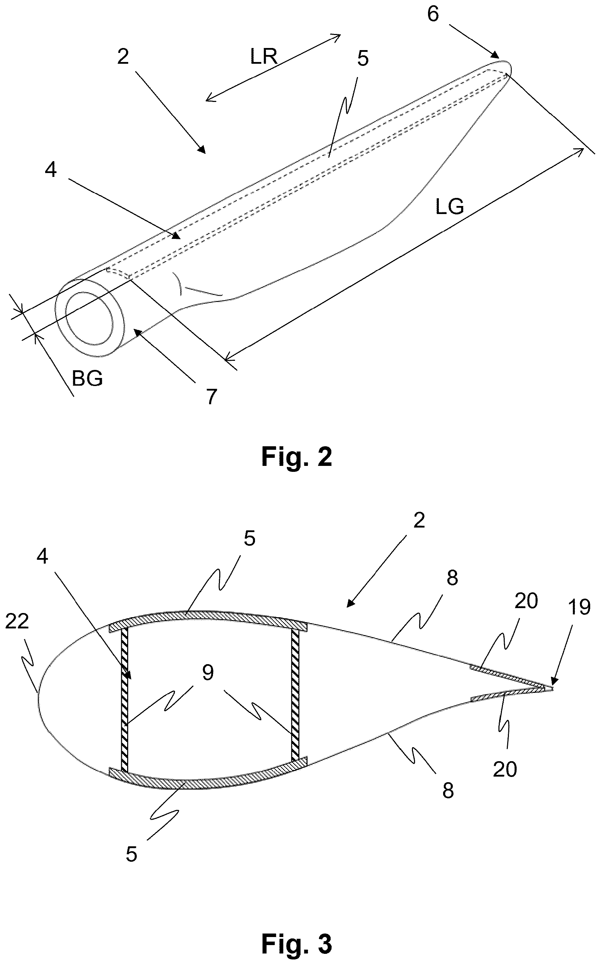

Figur 2 zeigt eine schematische, perspektivische Darstellung eines Rotorblatts 2 mit einem Gurt. Vorliegend ist lediglich schematisch und in gestrichelter Darstellung ein Holm 4 mit einem Holmgurt 5 dargestellt, der im Inneren des Rotorblatts 2 angeordnet ist und dieses versteift. Das Rotorblatt 2 weist in üblicher Weise eine Blattspitze 6 und eine Blattwurzel 7 auf, mit welcher es an der Nabe 18 (s. Fig. 1) befestigt werden kann. Weiterhin sind der Darstellung die Abmessungen des Holmgurts 5 mit der Breite BG und der Länge LG entnehmbar. Wie ersichtlich, erstreckt sich der Holm 4 mit dem Holmgurte 5 in der Längsrichtung LR des Rotorblatts 2 nahezu über dessen gesamte Länge und verleiht diesem seine Biegesteifigkeit. Der nähere Aufbau eines solchen Holmes 4 ist der Figur 3 entnehmbar.

Figur 3 zeigt eine schematische Schnittdarstellung eines Rotorblatts 2 mit einem Holm 4 mit zwei Holmgurten 5. Weiterhin weist das vorliegende Rotorblatt 2 zwei entlang der Hinterkante 19 des Rotorblatts 2 verlaufende Hinterkantengurte 20 auf. Diese müssen jedoch nicht unbedingt vorhanden sein. Die Holmgurte 5 verlaufen ebenso wie die hier dargestellten Hinterkantengurte 20 im Rotorblatt 2 an der Innenseite der Schalen 8 des Rotorblatts 2. Zusätzlich können auch noch Gurte an der Vorderkante 21 vorgesehen sein. Der Holm 4 weist in an sich bekannter Weise einen oder mehrere Schubstege 9 und vorliegend zwei Holmgurte 5 auf. Sowohl die Holmgurte 5 als auch die optionalen Vorder- und Hinterkantengurte 20 können gemäß der vorliegenden Erfindung ausgebildet sein.

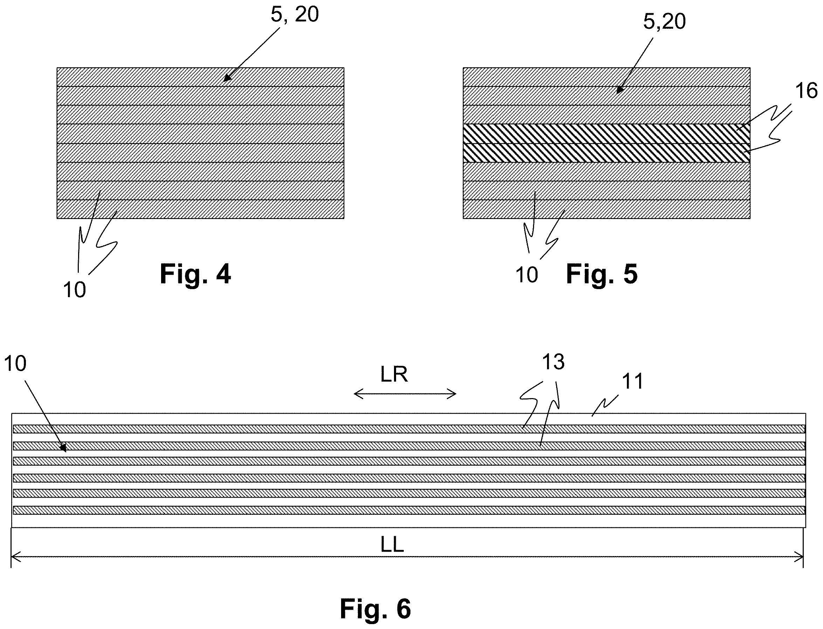

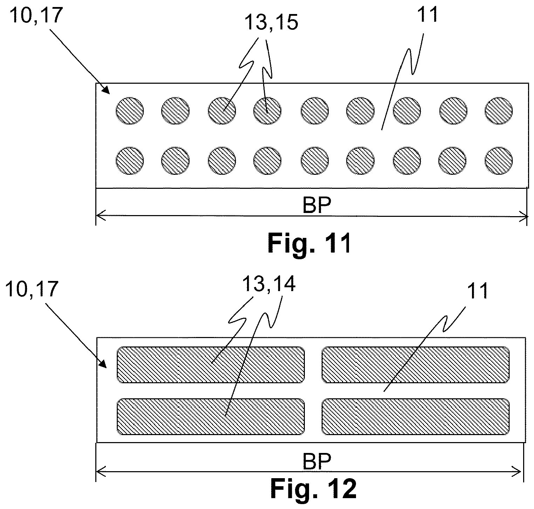

Figur 4 zeigt eine schematische Schnittdarstellung eines Gurtes 5, 20 mit mehreren, übereinander angeordneten Lagen 10 aus einem Faserverbundwerkstoff nach einer ersten Ausführung. Die einzelnen Lagen 10 können sowohl einzelne, in eine Kunststoff-Matrix 11 (s. Fig. 6) eingebettete Faserlagen sein als auch vorgefertigte Längsprofile 17 (s. Fig. 11). Die Lagen 10 werden miteinander verbunden, um den Gurt 5, 20 auszubilden. Gemäß der hier gezeigten Ausführung ist der Gurt 5,20 einheitlich aus mehreren gleichen Lagen 10 ausgebildet.

Figur 5 zeigt hingegen eine schematische Schnittdarstellung einer anderen Ausführung eines Gurtes 5, 20 bei welcher neben den mehreren, übereinander angeordneten Lagen 10 aus einem Faserverbundwerkstoff noch weitere Lagen 16 aus einem weiteren Faserverbundwerkstoff in dem Gurt 5, 20 angeordnet sind. Bezüglich der Anordnung der unterschiedlichen Lagen 10,16 sind zahlreiche Varianten möglich. So können die unterschiedlichen Lagen 10,16 sowohl abwechselnd zueinander angeordnet werden, als auch ist es möglich, Lagen ca. 16 aus einem weiteren Faserverbundwerkstoff in bestimmten Bereichen des Gurtes 5,20 anzuordnen. Bezüglich der einzelnen Lagen 10, 16 gilt wie zu Figur 4, dass diese sowohl einzelne, in eine Kunststoff-Matrix 11 (s. Fig. 6) eingebettete Faserlagen sein können als auch vorgefertigte Längsprofile 17 (s. Fig. 11), die miteinander verbunden werden, um den Gurt 5, 20 auszubilden.

Zum Verbinden der Lagen 10, 16 kommen mehrere Verfahren in Frage:
Nach einer ersten Ausführung können fertig ausgehärtete Faserverbundwerkstoffe in Form von Längsprofile 17 in eine Kunststoff-Matrix 11 (s. Fig. 6) eingebettet werden und durch Aushärten der Kunststoff-Matrix 11 miteinander verbunden werden. Das Matrixmaterial, mit dem die einzelnen Lagen 10 miteinander verbunden werden kann dabei das gleiche Matrixmaterial sein wie das der einzelnen, als Längsprofil 17 vorgefertigten Lagen 10, es kann jedoch auch ein anderes Matrixmaterial verwendet werden. Die einzelnen Lagen 10 können vorimprägniert werden und in die Form des Rotorblatts 2 eingesetzt werden. Alternativ können die einzelnen Lagen 10 jedoch auch vor dem Einsetzen in das Rotorblatt 2 miteinander verbunden werden und der so entstandene Gurt 5, 20 dann im Gesamten in das Rotorblatt 2 eingelegt werden. Die einzelnen Lagen 10 können gegebenenfalls auch in anderer Weise, beispielsweise durch Verkleben, miteinander verbunden werden.

Nach einer anderen Ausführung können mehrere Einzellagen aus recycelten Carbonfasern 12 übereinandergelegt werden und miteinander ausgehärtet werden. Die Einzellagen können dabei vorimprägniert werden oder auch erst nach dem Einlegen in die Form einzeln oder miteinander im Infusionsverfahren imprägniert werden. Nach dem Aushärten liegen die einzelnen Lagen 10 aus einem Faserverbundwerkstoff übereinander angeordnet vor.

Figur 6 zeigt eine schematische Längsschnittdarstellung einer einzelnen Lage 10 eines Gurtes 5, 20 mit den darin angeordneten Carbonfasern 12. dabei ist ersichtlich, dass sich die Carbonfasern 12 in Längsrichtung LR der Lage 10 erstrecken. Weiterhin ist mit LL die Länge der hier dargestellten, einzelnen Lage 10 bezeichnet.

Gemäß der vorliegenden Darstellung liegen die Carbonfasern 12 in Form von Faserkomplexen 13 vor, die sich unterbrechungsfrei über die gesamte Länge der Lage 10 erstrecken. Da Recyclingfasern nach dem Recyclingprozess als Stapelfasern unterschiedlicher Länge vorliegen, werden diese vorzugsweise zu Faserkomplexen 13 zusammengefasst. Die Faserkomplexe 13 können sodann wie Kohlefaserrovings aus Carbonneufasern verwendet werden. Die Faserkomplexe 13 sind parallel zueinander und in Längsrichtung LR der Lage 10 ausgerichtet. Die Faserkomplexe 13 sind in eine Kunststoff-Matrix 11 eingebettet, die in der Regel ein Duromermaterial beinhaltet. Die Faserkomplexe 13 können sowohl einzeln als auch in Form von Gelegen, Gesticken usw. in die Matrix 11 eingebettet sein. Wie bereits erwähnt, können die einzelnen Lage als Pultrusionsprofile, als Sheet-Moulding-Compound-Profile oder sonstige Profile vorgefertigt sein oder imprägnierte Einzellagen aus Carbonfasern 12 sein.

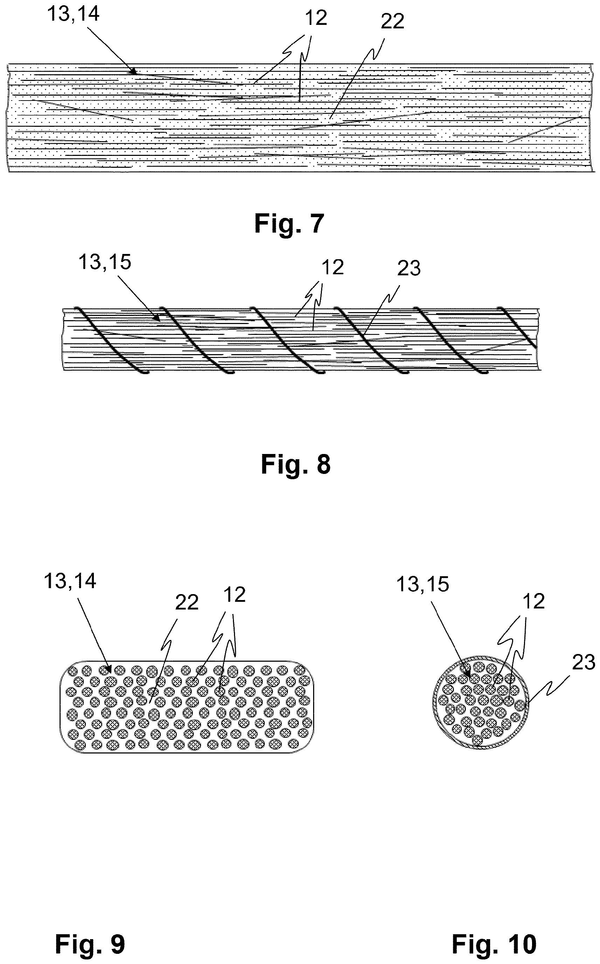

Figur 7 zeigt eine schematische Darstellung eines Faserkomplexes 13 mit recycelten Carbonfasern 12 in Form eines Tapes 14. Der Faserkomplex 13 umfasst eine Vielzahl von parallelisierten Carbonfasern 12, die vorliegend lediglich symbolisch als Striche dargestellt sind. Innerhalb des Tapes 14 bzw. des Faserkomplexes 13 sind die einzelnen Carbonfasern 12 mittels eines Bindematerials 22 zusammengehalten. Die vorliegende Darstellung ist dabei lediglich schematisch zu verstehen. Je nach Ausführung des Bindematerials 22 sind die einzelnen Carbonfasern 12 in einer Ansicht unter Umständen gar nicht sichtbar, sondern würden erst in einer Schnittansicht erkennbar sein.

Das Bindematerial 22 kann beispielsweise ein thermoplastisches Bindematerial 22 sein. Andere Bindematerialen 22 wie Schlichtemittel kommen jedoch ebenfalls infrage.

Um möglichst gute mechanische Kennwerte zu erreichen, die es rechtfertigen, recycelte Carbonfasern 12 in Gurten 5, 20 einzusetzen, müssen die einzelnen Carbonfasern 12 hochausgerichtet in dem Faserkomplex 13 vorliegen. Dies ist der vorliegenden Figur 7 entnehmbar, bei welcher lediglich einige wenige Carbonfasern 12 etwas schräg zu einer Längserstreckung des Tapes 14 liegen.

Figur 8 zeigt eine andere Ausführung eines Faserkomplexes 13, welcher in Form eines Garns 15 vorliegt. Die Carbonfasern 12, welche auch hier als Recycling-Stapelfasern vorliegen, können beispielsweise in einem Spinnprozess durch Drehung miteinander verbunden werden. Vorliegend ist jedoch eine andere Ausführung gezeigt, bei welcher das Garn 15 als Umwindegarn ausgebildet ist und bei welchem die einzelnen Carbonfasern 12 mittels eines Umwindefadens 23 zu einem Faserkomplex 13 verbunden sind.

Figur 9 zeigt demgegenüber einen Querschnitt eines Faserkomplexes 13, der ebenfalls in Form eines Tapes 14 ausgebildet ist. Dabei ist wiederum gut erkennbar, dass die einzelnen Carbonfasern 12 parallel zueinander und parallel zueinander in Längsrichtung LR des Tapes 14 ausgerichtet in dem Faserkomplex 13 vorliegen und durch das Bindematerial 22 gebunden sind.

Ebenso sind die Abmessungen des Faserkomplexes 13 erkennbar. Vorteilhaft ist es, wenn, wie hier gezeigt, die Faserkomplexe 13 ein Breiten-Dickenverhältnis von mehr als 2:1 aufweisen. Es können Tapes mit einer Breite bis zu 15 mm oder bis zu 25 mm erzeugt werden.

Figur 10 zeigt einen Querschnitt eines anderen Faserkomplexes 13, welcher als Garn 15 ausgebildet ist. Wie bereits anhand der Figur 9 erläutert, kann das Garn 15 als Umwindegarn ausgebildet sein, bei welchem die Carbonfasern 12 mittels eines Umwindefadens 23 zusammengehalten sind.

Figur 11 zeigt eine schematische Querschnittsdarstellung einer Lage 10 aus einem erstem Faserverbundwerkstoff in Form eines Längsprofils 17. wie bereits erwähnt, können solche Längsprofil 17 bevorzugt in einem Pultrusionsverfahren hergestellt werden. Die einzelnen Faserkomplexe 13 liegen vorliegend in Form von Garnen 15 in dem Pultrudat vor. Es versteht sich, dass auch weniger oder mehr Faserkomplexe 13 sowohl übereinander als auch nebeneinander in dem Längsprofil 17 angeordnet liegen können. Weiterhin ist noch die Breite BP des Längsprofils 17 bzw. der Lage 10 dargestellt, welche vorzugsweise der Breite BG des vorgesehenen Gurtes 5, 20 entspricht.

Figur 12 zeigt hingegen eine schematische Querschnittsdarstellung einer Lage 10 aus einem erstem Faserverbundwerkstoff in Form eines Längsprofils 17, bei dem die einzelnen Faserkomplexe 13 in Form von Tapes 14 vorliegen. Im Übrigen entspricht das Längsprofil 17 dem der Figur 11.

Zusammenfassend ist es möglich, auch recycelte Carbonfasern 12 in Form von Stapelfasern in den hochbeanspruchten Gurten 5, 20 von Rotorblättern 2 einzusetzen, wenn diese mit einem hohen Ausrichtungsgrad in den Lagen 10 der Gurte 5, 20 angeordnet sind. Insbesondere, wenn die Carbonfasern 12 zu endlosen Faserkomplexen 13 zusammengefasst werden, können besonders hohe Ausrichtungsgrade von mehr als 95% +/- 5° erreicht werden. Zugleich kann bei einem hohen Ausrichtungsgrad der Carbonfasern auch der für die guten mechanischen Eigenschaften der Faserverbundwerkstoffe wichtige Faservolumengehalt erhöht werden. Dieser beträgt mindestens 40% und kann bei hohem Ausrichtungsgrad mehr als 45% und sogar mehr als 50% betragen.

### Bezugszeichenliste

- 1: Windkraftanlage
- 2: Rotorblatt
- 3: Turm
- 4: Holm
- 5: Holmgurt
- 6: Blattspitze
- 7: Blattwurzel
- 8: Schale
- 9: Schubsteg
- 10: Lage aus erstem Faserverbundwerkstoff
- 11: Kunststoff-Matrix
- 12: Carbonfaser
- 13: Faserkomplex
- 14: Tape
- 15: Garn
- 16: Lage aus weiterem Faserverbundwerkstoff
- 17: Längsprofil
- 18: Nabe
- 19: Hinterkante
- 20: Hinterkantengurt
- 21: Vorderkante
- 22: Bindematerial
- 23: Umwindefaden

- LR: Längsrichtung
- LL: Länge der Lage
- LG: Länge des Gurts
- BG: Breite des Gurts
- BP: Breite des Längsprofils

## Patentansprüche

1. Gurt (5,20), insbesondere Holmgurt (5), für ein Rotorblatt (2) einer Windkraftanlage (1),
mit mehreren übereinander angeordneten, sich in einer Längsrichtung (LR) des Gurts (5,20) erstreckenden Lagen (10) aus wenigstens einem ersten Faserverbundwerkstoff, welcher eine Vielzahl von in eine Kunststoff-Matrix (11) eingebetteten Carbonfasern (12) umfasst, **dadurch gekennzeichnet,**
**dass** die Carbonfasern (12) einen Anteil von wenigstens 50%, vorzugsweise wenigstens 80%, recycelten Carbonfasern (12) aufweisen, wobei die recycelten Carbonfasern (12) in Form von Stapelfasern vorliegen, die parallelisiert in der jeweiligen Lage (10) angeordnet sind.

2. Gurt (5,20) nach dem vorherigen Anspruch, **dadurch gekennzeichnet, dass** die Carbonfasern (12) einen Anteil von 90% - 100% recycelten Carbonfasern (12) aufweisen.

3. Gurt (5,20) nach einem der vorherigen Ansprüche, **dadurch gekennzeichnet, dass** die Carbonfasern (12) sich unidirektional in einer Längsrichtung (LR) der Lagen (10) erstrecken.

4. Gurt (5,20) nach einem der vorherigen Ansprüche, **dadurch gekennzeichnet, dass** die recycelten Carbonfasern (12) parallelisiert und zu kontinuierlichen Faserkomplexen (13), insbesondere zu Tapes (14) oder Garnen (15), zusammengefasst in dem Faserverbundwerkstoff vorliegen, wobei vorzugsweise die Faserkomplexe (13) sich über eine gesamte Länge (LL) der jeweiligen Lage (10) erstrecken.

5. Gurt (5,20) nach einem der vorherigen Ansprüche, **dadurch gekennzeichnet, dass** die Carbonfasern (12) innerhalb der Lagen (10), insbesondere innerhalb der Faserkomplexe (13), hochausgerichtet sind, wobei ein Ausrichtungsgrad der Carbonfasern (12) mindestens 95% +/-5° beträgt.

6. Gurt (5,20) nach einem der vorherigen Ansprüche, **dadurch gekennzeichnet, dass** die Kunststoff-Matrix (11) ein Duromermaterial, insbesondere ein Vinylesterharz oder ein Epoxidharz, beinhaltet.

7. Gurt (5,20) nach einem der vorherigen Ansprüche, **dadurch gekennzeichnet, dass** der Gurt (5,20) sich in einer Längsrichtung (LR) des Gurts (5,20) erstreckende Lagen (16) aus wenigstens einem weiteren Faserverbundwerkstoff, insbesondere einem Faserverbundwerkstoff umfassend oder bestehend aus Carbonneufasern und/oder einem Faserverbundwerkstoff mit einer alternativen Kunststoff-Matrix (11), umfasst.

8. Gurt (5,20) nach einem der vorherigen Ansprüche, **dadurch gekennzeichnet, dass** wenigstens ein Teil der Lagen (10,16) sich über die gesamte Länge (LL) des Gurts (5,20) erstreckt.

9. Gurt (5,20) nach einem der vorherigen Ansprüche, **dadurch gekennzeichnet, dass** die Lagen (10) plattenförmige oder stangenförmige Längsprofile (17), insbesondere pultrudierte Längsprofile (17), umfassen.

10. Gurt (5,20) nach einem der vorherigen Ansprüche, **dadurch gekennzeichnet, dass** Lagen (10) aus dem ersten Faserverbundwerkstoff, insbesondere die Längsprofile (17), eine Zugfestigkeit von mindestens 1400 MPa, vorzugsweise 1800 MPa und besonders bevorzugt mindestens 2000 MPa aufweisen.

11. Gurt (5,20) nach einem der vorherigen Ansprüche, **dadurch gekennzeichnet, dass** die Lagen (10) einen Faservolumengehalt von wenigstens 40%, bevorzugt von wenigstens 50% und besonders bevorzugt von wenigstens 60% aufweisen.

12. Rotorblatt (2) für eine Windkraftanlage (1) mit einer ein- oder mehrteiligen Schale und wenigstens einem Gurt (5,20) nach einem der vorhergehenden Ansprüche.

13. Rotorblatt (2) nach dem vorherigen Anspruch, **dadurch gekennzeichnet, dass** der wenigstens eine Gurt (5,20) auf einer windzugewandten Seite des Rotorblattes (2) angeordnet ist.

14. Rotorblatt (2) nach einem der vorherigen Ansprüche, **dadurch gekennzeichnet, dass** das Rotorblatt (2) einen weiteren Gurt (5,20) nach einem der Ansprüche 1 - 16 aufweist, welcher auf einer windabgewandten Seite des Rotorblattes (2) angeordnet ist.

15. Verfahren zur Herstellung eines Gurts (5, 20) nach einem der Ansprüche 1 - 15, umfassend zumindest die Schritte
- Bereitstellen von Carbonfasern (12) mit einem Anteil von wenigstens 50%, vorzugsweise wenigstens 80%, recycelter Carbonfasern (12) in Form von Stapelfasern,
- Parallelisieren der Carbonfasern (12)
- Herstellen mehrerer Lagen (10) aus wenigstens einem ersten Faserverbundwerkstoff durch Einbetten der Carbonfasern (12) in eine Kunststoff-Matrix
- Ausbilden des Gurts (5,20) durch Anordnen der Lagen (10) aus Faserverbundwerkstoff übereinander und in einer Längsrichtung (LR) des Gurts (5,20).

16. Verfahren nach dem vorherigen Anspruch, **gekennzeichnet durch** einen Schritt des Zusammenfassens der Carbonfasern (12) zu kontinuierlichen Faserkomplexen (13), insbesondere zu Tapes (14) oder Garnen (15).

17. Verfahren nach einem der beiden vorherigen Ansprüche, **gekennzeichnet durch** einen Schritt des Aushärtens der Lagen (10) vor dem Anordnen übereinander.

18. Verfahren nach einem der vorherigen Verfahrensansprüche, **dadurch gekennzeichnet, dass** weitere sich in einer Längsrichtung (LR) des Gurts (5,20) erstreckende Lagen (10) aus wenigstens einem weiteren Faserverbundwerkstoff in dem Gurt (5,20) angeordnet werden.

19. Verfahren nach einem der vorherigen Verfahrensansprüche, **dadurch gekennzeichnet, dass** die recycelten Carbonfasern (12) aus End-of-Life-Bauteilen, insbesondere aus End-of-Life-Rotorblättern, gewonnen werden.

20. Verfahren nach einem der vorherigen Verfahrensansprüche, **dadurch gekennzeichnet, dass** die recycelten Carbonfasern (12) in einem Solvolyseverfahren gewonnen werden.
